Europäisches Patentamt

European Patent Office

Office européen des brevets

(11) Numéro de publication: **0 156 657**
**A1**

# (12) DEMANDE DE BREVET EUROPEEN

(21) Numéro de dépôt: 85400094.0

(22) Date de dépôt: 21.01.85

(51) Int. Cl.⁴: **B 01 J 20/32**
G 01 N 30/48, C 08 G 65/04

(30) Priorité: 25.01.84 FR 8401146

(43) Date de publication de la demande:
02.10.85 Bulletin 85/40

(84) Etats contractants désignés:
AT BE CH DE GB IT LI LU NL SE

(71) Demandeur: Etablissement Public dit: CENTRE
NATIONAL DE LA RECHERCHE SCIENTIFIQUE (CNRS)
15, Quai Anatole France
F-75007 Paris(FR)

(72) Inventeur: Chaumont, Philippe
4 rue du Nord
F-67610 La Wantzenau(FR)

(72) Inventeur: Beinert, Gérard
27 Rue du Ziegefeld
F-67100 Strasbourg(FR)

(72) Inventeur: Herz, Jean
17 rue Principale - St Pierre
F-67140 Barr(FR)

(72) Inventeur: Rempp, Paul
48 rue de Ribeauvillé
F-67100 Strasbourg(FR)

(74) Mandataire: Gillard, Marie-Louise et al,
Cabinet Beau de Loménie 55, Rue d'Amsterdam
F-75008 Paris(FR)

(54) Copolymères réticulés non ioniques, partiellement hydrophiles, et leur application à la chromatographie d'exclusion en milieu aqueux.

(57) L'invention concerne des copolymères réticulés non ioniques, partiellement hydrophiles.

Ces copolymères sont constitués d'un squelette hydrophobe réticulé ayant une résistance mécanique élevée et de chaînes hydrophiles non ioniques greffées sélectivement sur ledit squelette.

Ces copolymères peuvent être utilisés dans la chromatographie d'exclusion en milieu aqueux.

Fig.1

Site de DVB
Squelette hydrophobe (polystyrène)
Chaînes hydrophiles (PEO)

1

<u>Copolymères réticulés non ioniques partiellement hydrophiles et leur</u>
<u>application à la chromatographie d'exclusion en milieu aqueux.</u>

La présente invention a pour objet des copolymères
à réseau tridimensionnel, non ioniques et partiellement hydrophiles.
Elle concerne également l'application de ces copolymères à la
chromatographie liquide sur gel perméable en milieu aqueux (ou
chromatographie d'exclusion).

La chromatographie d'exclusion est une technique
appropriée pour la caractérisation de substances polymères.

Dans la plupart des cas, les colonnes de remplissage sont constituées, soit de réseaux macroporeux de styrène-divinylbenzène fortement réticulés, soit de gels de silice poreux.
Les gels de silice doivent subir des modifications chimiques
superficielles pour être utilisés avec des solvants organiques
comme éluants.

Les deux types de remplissage ci-dessus sont
généralement disponibles sous la forme de billes sphériques microscopiques. Leur résistance mécanique en présence d'un éluant est
bonne ; même sous des pressions d'élution élevées le volume poreux
de la colonne reste inchangé et bien défini pour un solvant
d'élution donné.

Le tétrahydrofuranne, le toluène et le diméthyl-formamide sont les solvants organiques les plus couramment utilisés
en chromatographie d'exclusion. Ils mouillent le remplissage
chromatographique et pénètrent dans les pores. Ils sont utilisés
avec succès pour la caractérisation des polymères et copolymères
organiques.

Il existe cependant des polymères qui requièrent
l'utilisation de l'eau comme éluant.

La chromatographie liquide sur gel perméable en
milieu aqueux présente un grand intérêt pour l'étude et la
caractérisation des polymères hydrosolubles. Cette classe très
importante de composés macromoléculaires englobe aussi bien des

2

polymères synthétiques que des polysaccharides, des protéines, ou autres biopolymères.

L'utilisation de l'eau comme solvant d'élution nécessite évidemment un gel hydrophile pour le remplissage des colonnes. Ce gel doit répondre aux exigences suivantes :

. Il doit avoir une affinité suffisante pour l'eau.

. Il doit présenter, en présence d'eau, un volume poreux important, facilement accessible.

. "Gonflé" dans l'eau, il doit avoir une bonne résistance mécanique qui lui permette de supporter des pressions élevées, par exemple de l'ordre de 80 à 100 bars.

Cependant, on a très souvent observé, avec des gels hydrophiles, tels que les dextranes ou les agaroses réticulés, un manque de résistance mécanique lorsque des pressions élevées leur sont appliquées ; ce manque de résistance se traduit souvent par une diminution du volume poreux accessible, et parfois par le colmatage de la colonne. Un tel phénomène se produit notamment lorsque les dimensions des pores du gel sont élevées. De tels gels sont utilisés pour la chromatographie d'exclusion des polymères à haut poids moléculaire. Pour pallier cet inconvénient on a tenté d'opérer à faible pression, donc avec des vitesses d'élution réduites ; la durée d'élution est en conséquence considérablement augmentée.

Il existe donc un besoin de copolymères réticulés à la fois hydrophiles et résistants dans les conditions normalement mises en oeuvre en chromatographie liquide sur gel perméable, en milieu aqueux.

On a maintenant trouvé de nouveaux copolymères réticulés non ioniques partiellement hydrophiles présentant une bonne résistance mécanique, notamment dans les conditions d'utilisation en chromatographie d'exclusion en milieu aqueux.

Les copolymères selon l'invention sont des copolymères à réseau tridimensionnel, non ioniques, partiellement hydrophiles, constitués d'un squelette hydrophobe ayant une résistance mécanique élevée, et de chaînes hydrophiles non ioniques greffées sélectivement sur ledit squelette.

Le squelette hydrophobe du copolymère selon l'invention est constitué d'une substance polymère réticulée rigide ayant une structure poreuse pratiquement dépourvue d'affinité pour l'eau.

A titre d'exemples de substances polymères réticulées appropriées aux fins de l'invention on citera notamment le polystyrène réticulé par copolymérisation séquencée avec le divinyl-benzène, les polymères méthacryliques polymérisés par voie anionique et réticulés par exemple à l'aide de diméthacrylate d'éthylène.

On notera que, de manière générale, l'agent de réticulation de la substance polymère est un monomère bi-insaturé, tel que le divinyl-benzène ou un diméthacrylate de polyméthylène, par exemple le diméthacrylate d'éthylène.

Les chaînes hydrophiles du copolymère selon l'invention sont fixées sur le squelette hydrophobe par greffage par amorçage carbanionique par l'intermédiaire du monomère bi-insaturé, agent de réticulation de la substance polymère.

Ces chaînes hydrophiles sont des polymères avantageusement formés in situ, tels que par exemple du polyoxiranne.

L'invention va être maintenant décrite plus en détail en référence au système copolymère polystyrène/polyoxiranne sans pour autant en limiter la portée.

Dans ce cas particulier, le squelette hydrophobe est constitué de polystyrène réticulé par du divinylbenzène, sur lequel sont ensuite fixées des chaînes hydrophiles de polyoxiranne.

Le procédé d'obtention de ce copolymère polystyrène/polyoxiranne consiste :

1) à réticuler un polystyrène $\alpha,\omega$-dicarbanionique à l'aide d'un monomère bi-insaturé, tel que le divinylbenzène ;

2) à introduire de l'oxiranne dans le polystyrène réticulé et gonflé,

3) à permettre la polymérisation dudit oxiranne, par exemple par élévation de la température du milieu réactionnel

ainsi formé, après diffusion de l'oxiranne à travers le polystyrène réticulé.

Le polystyrène "vivant" dicarbanionique d'un poids moléculaire donné est obtenu par réaction à basse température du styrène, dans un solvant approprié, tel que le tétrahydrofuranne, avec un amorceur dianionique, par exemple le tétramère dipotassique de l'$\alpha$-méthylstyrène.

A une solution du polymère "vivant" ainsi obtenue on ajoute ensuite à basse température sous agitation efficace, une faible quantité du monomère bi-insaturé, le divinylbenzène. Les sites carbanioniques du polystyrène agissent comme amorceurs de la polymérisation du divinylbenzène, laquelle conduit à la formation d'un réseau tridimensionnel, dans lequel les chaînes linéaires du polystyrène constituent les chaînes élastiques. La masse moléculaire moyenne de ces chaînes élastiques est avantageusement comprise entre 1000 et 500.000 g/mol. Dans ce réseau tridimensionnel, chaque point de ramification est un nodule de polydivinylbenzène lié à p extrémités de chaînes du polystyrène précurseur, qui ont contribué à l'amorçage de celui-ci. Les sites actifs anioniques n'ont pas été détruits et sont maintenant situés au niveau des nodules de polydivinylbenzène (DVB). Ces sites sont utilisés pour greffer les chaînes hydrophiles.

On introduit alors de l'oxiranne dans le réseau "vivant" gonflé et on le laisse diffuser lentement à basse température. L'oxiranne réagit avec les sites carbanioniques pour former des fonctions alcoxy. Lorsque l'oxiranne est uniformément distribué dans le réseau de polystyrène gonflé on procède à la polymérisation de l'oxiranne. Cette polymérisation est avantageusement réalisée par augmentation appropriée de la température du milieu réactionnel, jusqu'à 25°C.

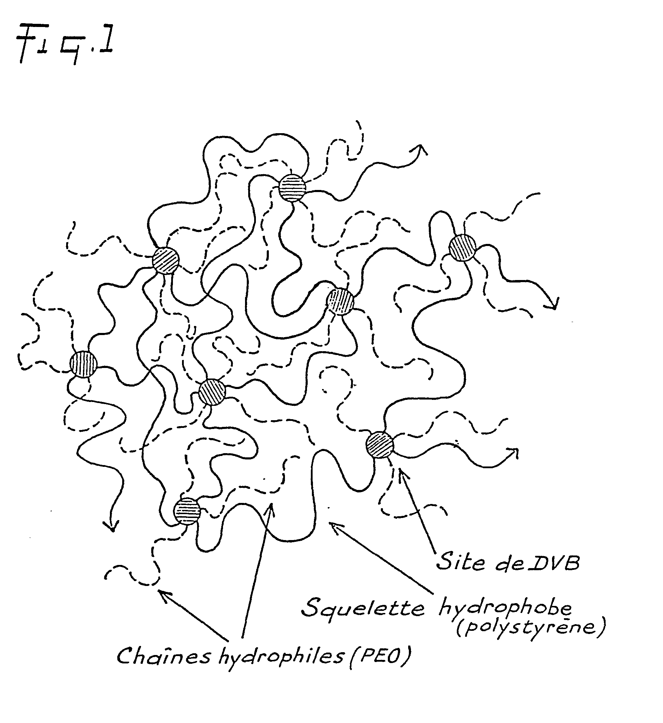

Les chaînes de polyoxiranne obtenues sont donc liées aux points de ramification du réseau de polystyrène, à savoir les nodules de polydivinylbenzène. Chaque chaîne est liée par une extrémité au réseau de polystyrène, tandis que l'autre extrémité reste libre. Les sites actifs sont ensuite protonés lorsque la polymérisation de l'oxiranne est achevée. La figure 1 annexée est une représentation schématique du copolymère selon l'invention.

La quantité et la longueur des chaînes de polyoxiranne dans le copolymère réticulé selon l'invention sont variables;elles sont fonction à la fois du nombre de sites actifs formés dans le squelette hydrophobe et de la quantité d'oxiranne mise en oeuvre.

Le copolymère réticulé ainsi obtenu est ensuite gonflé dans un excès de solvant et les constituants solubles sont soigneusement extraits à l'aide de tétrahydrofuranne, lesdits constituants étant principalement du polyoxiranne.

En mettant en oeuvre, dans le procédé ci-dessus, du polystyrène ayant une masse moléculaire moyenne en poids de 50.000 g/mol. et une masse moléculaire moyenne en nombre de 43.000 g/mol., du divinylbenzène à raison de 15 molécules par extrémité de chaîne carbanionique et de l'oxiranne à raison de 40 % en poids de la quantité de styrène mis en oeuvre, on a obtenu un copolymère styrène-polyoxiranne à réseau tridimensionnel ayant les caractéristiques ci-après ; en supposant que chaque site carbanionique initialement présent dans le système réticulé permette la formation d'une chaîne pendante de polyoxiranne, on peut calculer approximativement la valeur de la masse moléculaire moyenne de ces chaînes.

. Analyse élémentaire : C % 80,08  H % 8,14  O % 11,82

. pourcentage pondéral de la
  fraction polyoxiranne          : 32,54 % (en poids)

. masse moléculaire moyenne du
  polystyrène de départ
  (déterminé par GPC)            : $\overline{M}_w$ = 50 000 g/mol., $\overline{M}_n$ = 43 000 g/mol.

. masse moléculaire moyenne
  calculée du polyoxiranne       : $\overline{M}_n$ = 11 300 g/mol.

. taux de gonflement à
  l'équilibre            dans le THF   Q = 26,6

                         dans l'eau    Q = 5,8

## Détermination du taux de gonflement

Après avoir été débarassé des constituants pouvant être extraits, le gel constitué par le copolymère selon l'invention est soumis aux mesures de gonflement à l'équilibre selon la technique décrite par P. WEISS, J. HERZ, P. REMPP, Makromol. Chem. 141, 145 (1971). Les taux de gonflement observés dans le tétrahydrofuranne sont relativement élevés, compatibles avec les valeurs attendues pour des réseaux ayant des chaînes élastiques de masse moléculaire moyenne en nombre de 50.000 g/mol.

Une fois séché, le gel ne peut plus se gonfler dans l'eau car la phase polystyrène est alors nettement en dessous de sa température de transition vitreuse et la structure rigide amorphe de celle-ci ne permet pas l'accès de l'eau aux chaînes hydrophiles greffés qu'elle contient. Cependant, lorsque le gel est gonflé dans le THF, ce solvant joue le rôle de plastifiant et un échange progressif de solvant entre le THF et l'eau peut être effectué avec succès.

Cet échange de solvant doit être poursuivi jusqu'à l'élimination complète du solvant initial de gonflement ; il entraîne un dégonflement partiel du réticulat.

Pour le copolymère particulier défini ci-dessus, le taux de gonflement à l'équilibre dans l'eau atteint le cinquième de sa valeur initiale, mesurée dans le THF.

La turbidité observée prend son origine dans la séparation de phases entre les deux constituants du réseau. Il en résulte que le volume poreux de ce réseau accessible à l'eau est loin d'être négligeable, en dépit du fait que la structure "efficace" du réseau tridimensionnel constituée par le copolymère de l'invention est essentiellement hydrophobe.

Les copolymères réticulés selon l'invention conviennent notamment comme matériaux de remplissage des colonnes de chromatographie d'exclusion. Dans ce domaine d'application, il importe que la température de transition vitreuse Tg de la partie hydrophobe soit sensiblement supérieure à la température d'utilisation de la colonne de chromatographie.

<u>Application des copolymères de l'invention à la chromatographie</u>
<u>d'exclusion.</u>

Pour être utilisé comme remplissage d'une colonne de chromatographie, le copolymère réticulé selon l'invention doit être réduit en fines particules ; cette réduction en fines particules est avantageusement effectuée dans un excès de THF, au moyen d'un mélangeur à haute vitesse. La suspension de gel dans le THF qui en résulte est ensuite versée dans un grand excès de méthanol, sous agitation efficace, puis filtrée et lavée avec du méthanol et séchée sous vide à 50°C.

Les particules sèches de gel sont alors passées au tamis et on sélectionne celles dont la granulométrie est comprise entre 100 et 200 µm pour les essais chromatographiques ci-après.

Comme cela est indiqué ci-dessus, les particules du copolymère réticulé selon l'invention ne peuvent pas être gonflées à nouveau directement dans l'eau.

Elles doivent d'abord être gonflées dans du THF et ensuite ce solvant est progressivement remplacé par l'eau, comme indiqué ci-dessus pour la détermination du degré de gonflement.

Le gel ainsi gonflé dans l'eau est ensuite introduit dans une colonne (60 cm de longueur et 0,8 cm de diamètre), munie à son extrémité inférieure d'un filtre fritté en cuivre et d'une plaque poreuse en "Téflon". Pour assurer un remplissage uniforme, le gel est mis en suspension dans une solution saline de même densité apparente. La colonne est ensuite connectée à un appareil de chromatographie GPC et on y fait circuler de l'eau, tout d'abord à un débit très faible, puis sous une pression opérationnelle qui est augmentée progressivement jusqu'à environ 20 bars de manière à permettre au gel de se tasser de manière efficace, après quoi le remplissage de la colonne est terminé. La colonne est à nouveau connectée à l'appareil GPC et de l'eau est pompée à travers celle-ci sous une pression de 20 bars pendant 24 heures. Cette opération permet d'éliminer tout le chlorure de sodium initialement présent et de tester la résistance mécanique du remplissage.

Pour tester l'aptitude de ces gels à la séparation chromatographique en milieu aqueux, on a utilisé des polyoxirannes standards de faible polydispersité ayant des poids moléculaires compris entre 270 g/mol. et 27500 g/mol. On a également utilisé de l'éthylèneglycol comme échantillon d'étalonnage de faible poids moléculaire. La pression choisie était de 70 bars, et la vitesse d'écoulement étant de 1,5 ml/min.

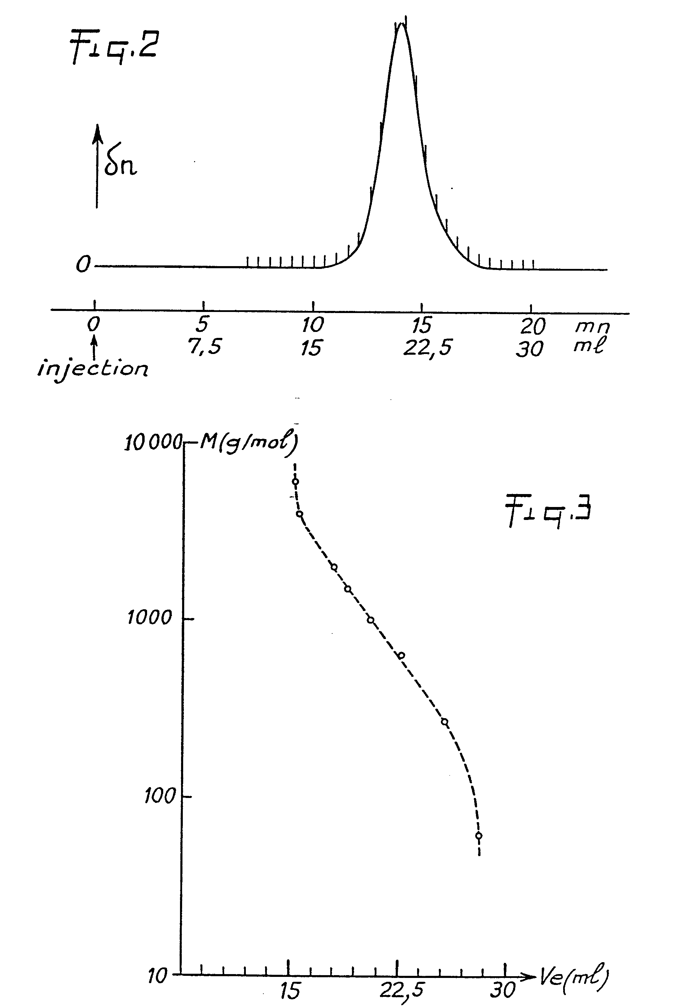

Les courbes d'élution obtenues dans ces conditions opératoires sont tout-à-fait reproductibles et montrent un maximum bien défini, comme on peut le voir sur la figure 2, qui est un exemple d'une telle courbe d'élution, dont l'abscisse représente le volume élué en ml (ou le temps en minutes) et l'ordonnée la variation $\delta$n, correspondant à la détection réfractométrique, qui est proportionnelle à la concentration de l'éluat.

Dans le tableau ci-après on a indiqué le poids moléculaire $\overline{Mn}$ des polyoxirannes avec les temps de rétention observés dans chaque cas.

Sur la figure 3 on a représenté la masse moléculaire (g/mol.) (en échelle logarithmique) en fonction du volume d'élution. Les points obtenus sont localisés sur une courbe d'élution caractéristique et bien définie, comparable en tous points à celles observées dans le cas des polymères élués avec des solvants organiques. Dans cet exemple de mise en oeuvre on notera que le domaine de sélectivité de ce gel particulier, pour la colonne choisie, et dans les conditions expérimentales utilisées, s'étend de 100 g/mol. à 5000 g/mol.

Malgré les pressions élevées qui ont été utilisées avec le gel selon l'invention on n'a pas noté de tendance au colmatage de celui-ci.

## T A B L E A U

| Echantillon | Poids moléculaire g/mol. | Temps de rétention mn |
|---|---|---|
| Polyoxiranne | 27 000 | 10,3 |
| " | 6 000 | 10,3 |
| " | 3 900 | 10,5 |
| " | 2 000 | 12,1 |
| " | 1 500 | 12,75 |
| " | 1 000 | 13,75 |
| " | 640 | 15,2 |
| " | 270 | 17,2 |
| Ethylène glycol | 62 | 18,8 |

REVENDICATIONS

1.      Copolymères réticulés non ioniques partiellement hydrophiles à réseau tridimensionnel, caractérisés en ce qu'ils sont constitués d'un squelette hydrophobe réticulé ayant une résistance mécanique élevée et de chaînes hydrophiles non ioniques greffées sélectivement sur ledit squelette, le greffage des chaînes non ioniques hydrophiles sur le squelette hydrophobe du copolymère étant réalisé par amorçage carbanionique à l'aide d'un monomère bi-insaturé.

2.      Copolymères réticulés selon la revendication 1, caractérisés en ce que le squelette hydrophobe est choisi parmi les polystyrènes et les polymères méthacryliques.

3.      Copolymères réticulés selon l'une des revendications 1 ou 2, caractérisés en ce que le monomère bi-insaturé est le divinylbenzène.

4.      Copolymères réticulés selon l'une des revendications 1 ou 2, caractérisés en ce que le monomère bi-insaturé est un diméthacrylate de polyméthylène.

5.      Copolymères réticulés selon l'une quelconque des revendications 1 à 4, caractérisés en ce que les chaînes hydrophiles non ioniques sont des chaînes de polyoxiranne.

6.      Copolymères réticulés selon l'une quelconque des revendications 1 à 5, caractérisés en ce que la masse moléculaire moyenne de chaînes élastiques du squelette hydrophobe est comprise entre 1000 g/mol. et 500.000 g/mol.

7.      Application des copolymères selon l'une quelconque des revendications 1 à 6 à la chromatographie d'exclusion.

8.      Application selon la revendication 7, caractérisée en ce que la température de transition vitreuse de la partie hydrophobe est supérieure à la température d'utilisation de la colonne.

Fig.1

Site de DVB

Squelette hydrophobe
(polystyrène)

Chaînes hydrophiles (PEO)

Fig.2

$\delta n$

0

injection

Fig.3

Office européen
des brevets

**RAPPORT DE RECHERCHE EUROPEENNE**

Numéro de la demande

EP 85 40 0094

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 280 923 (H. SMALL u.a.)<br>* Revendications; colonne 3, lignes 25-68 * | 1-8 | B 01 J 20/32<br>G 01 N 30/48<br>C 08 G 65/04 |
| Y | FR-A-2 189 422 (BASF)<br>* Revendications * | 1-8 | |
| A | CHEMICAL ABSTRACTS, vol. 89, 1978, page 44, no. 60685z, Columbus, Ohio, US; & JP - A - 77 150 093 (SEKISUI CHEMICAL CO., LTD.) 13-12-1977<br>* Résumé * | 1 | |
| A | GB-A-2 113 226 (KUREHA)<br>* Revendications * | 1 | |

DOMAINES TECHNIQUES RECHERCHES (Int. Cl.4)

G 01 N
B 01 J
C 08 G

Le présent rapport de recherche a été établi pour toutes les revendications

| Lieu de la recherche | Date d'achèvement de la recherche | Examinateur |
|---|---|---|
| LA HAYE | 15-05-1985 | DERAEDT G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82